# EUROPEAN PATENT SPECIFICATION

(11) **EP 1 635 543 B1**
(45) Date of publication and mention of the grant of the patent: **23.04.2008**
(21) Application number: 04255537.5
(22) Date of filing: 13.09.2004
(51) Int. Cl.: H04M 1/2745

(54) **Handheld electronic device having improved phone call log, and associated method**
Tragbares elektronisches Gerät mit verbessertem Anrufsprotokoll und dazugehöriges Verfahren
Dispositif électronique portable comprenant un journal d'appels amélioré et procédé associé

(43) Date of publication of application: 15.03.2006
(73) Proprietor: Research In Motion Limited, Waterloo, Ontario N2L 3W8 (CA)
(72) Inventor: Bocking, AndrewD., Waterloo, Ontario, N2K 3Y8 (CN); Vander Veen, Raymond P., Waterloo, Ontario, N2V 2M6 (CN)
(74) Representative: Hibbert, Juliet Jane Grace

(56) References cited:
- EP-A- 0 809 411
- GB-A- 2 259 429
- US-A- 5 592 546
- US-A- 6 064 725
- US-A1- 2003 148 790

## Description

### BACKGROUND OF THE INVENTION

### Field of the Invention

The invention relates generally to handheld electronic devices and, more particularly, to a handheld electronic device having an improved phone call log. The invention also relates to a method of logging and displaying information relating to phone calls placed with and received or missed by a handheld electronic device.

### Description of the Related Art

Numerous types of handheld electronic devices are known. Examples of such handheld electronic devices include, for instance, personal data assistants (PDAs), handheld computers, two-way pagers, cellular telephones, and the like. Such handheld electronic devices are generally intended to be portable and thus are relatively small. Many handheld electronic devices also feature wireless communication capability, although many such handheld electronic devices are stand-alone devices that are functional without communication with other devices.

Many handheld electronic devices include cellular telephone functionality. Such devices often store a log of phone calls placed, received and/or missed by the device in what is commonly referred to as a call log. Information contained in the call log may be selectively accessed by and displayed to the user of the handheld electronic device. Such information is useful to the user to, among other things, help to recall if and when a particular phone call was placed, received, or missed, and to access information about the call such as, for example, the associated telephone number or the name, address or email address of the person associated with the call.

Prior art call logs typically display the phone call information to the user chronologically based on the time and date associated with each call, usually beginning with the most recent call first. Some prior art call logs group and display the logged calls based on the category in which the call falls, i.e., a missed call, a received called, or a placed call. In this case, the calls are still typically displayed chronologically. No effort has been made, however, in the known prior art to group or link together all logged calls that are associated with the same originating or dialed phone number or contact person so that the user of the handheld electronic device can have a contact based view of phone call history. Thus, with known prior art call logs, if a user is interested in knowing the history of calls associated with a particular originating or dialed phone number or contact person, the user must manually search through the chronologically organized call log for all entries for that phone number or contact person.

GB2259429 discloses a portable telephone comprises a memory having an area for recording call durations, dates and times for each speed dialing number, a timer for measuring the call durations, dates and times when a certain speed dialing number is used, and a device for writing the call durations, dates and times into the memory area to which the same speed dialing number is assigned. If the user of the portable telephone presses a certain speed dialing number and talks with somebody, the timer measures the call duration, date and time and these data are written into the memory area of the memory. The speed dialing number corresponds to a full telephone number of a receiving party and is registered in the portable telephone beforehand. For each speed dialing number, only the latest call, or all calls, may be logged.

### SUMMARY OF THE INVENTION

According to an aspect of the invention, there is provided a method of providing a call log on a handheld device as defined in claim 1.

According to another aspect of the invention, there is provided a handheld electronic device as defined in claim 14.

### BRIEF DESCRIPTION OF THE DRAWINGS

A full understanding of the invention can be gained from the following Description of the Preferred Embodiment when read in conjunction with the accompanying drawings in which:
Fig. 1 is a front view of an improved handheld electronic device in accordance with the invention;
Fig. 2 is a block diagram of the handheld electronic device of Fig. 1;
Fig. 3 is a view of a portion of the display of the handheld electronic device of Fig. 1 showing a call log in accordance with the invention;
Fig. 4 is a flowchart depicting a portion of a routine executed by a processor of the handheld electronic device of Fig. 1 for creating and displaying a call log in accordance with the invention;
Fig. 5 is a view of a portion of the display of the handheld electronic device of Fig. 1 showing a call log and a user option menu in accordance with the invention;
Fig. 6 is a flowchart depicting a portion of a routine executed by a processor of the handheld electronic device of Fig. 1 for creating and displaying a call history in accordance with the invention; and
Fig. 7 is a view of a portion of a display of the handheld electronic device of Fig. 1 showing a call history in accordance with the invention.

Similar numerals refer to similar parts throughout the specification.

### DESCRIPTION OF THE PREFERRED EMBODIMENT

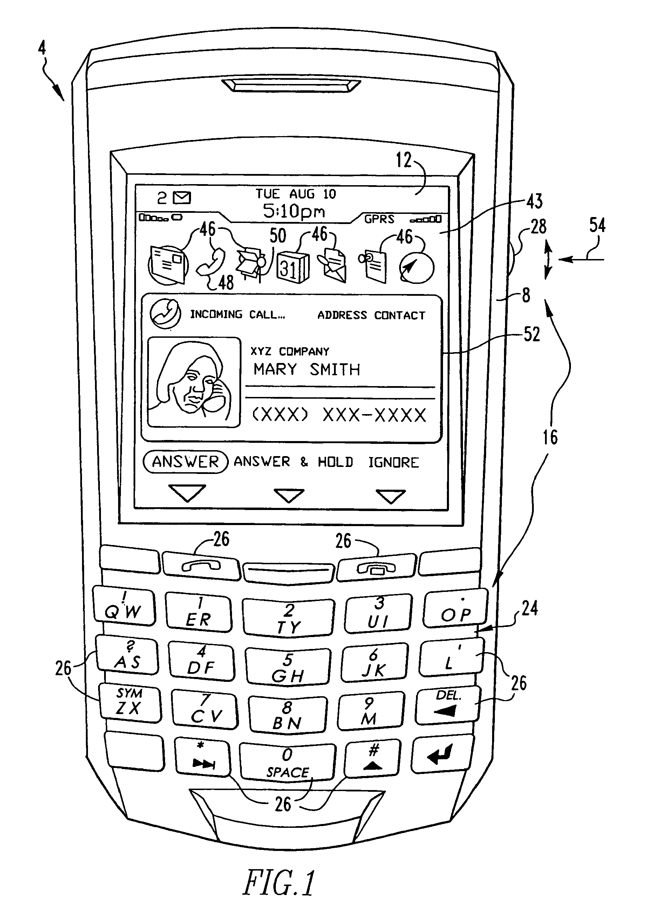

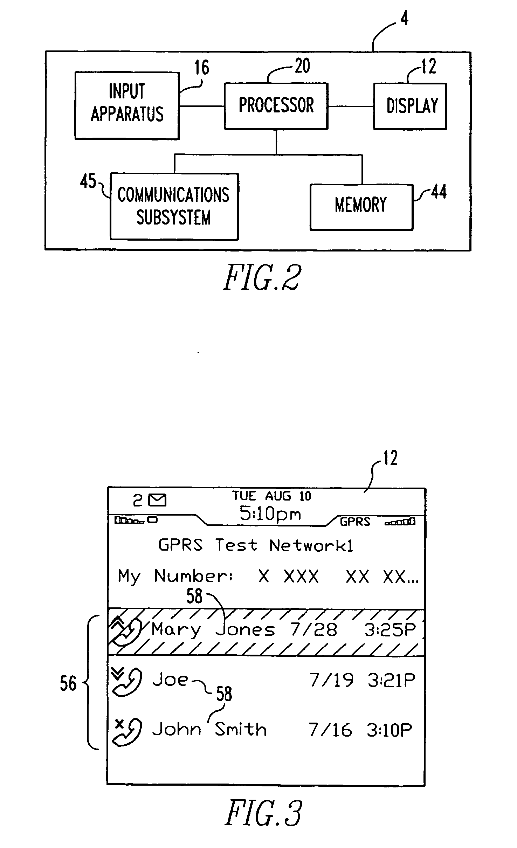

An improved handheld electronic device 4 in accordance with the invention is depicted generally in Figs. 1 and 2. The handheld electronic device 4 includes a housing 8, a display 12, an input apparatus 16, and a processor 20 (Fig. 2) which may be, without limitation, a microprocessor (µP). The processor 20 is responsive to inputs received from the input apparatus 16 and provides outputs to the display 12. While for clarity of disclosure reference has been made herein to the exemplary display 12 for displaying various types of information, it will be appreciated that such information may be stored, printed on hard copy, be computer modified, or be combined with other data, and all such processing shall be deemed to fall within the terms "display" or "displaying" as employed herein. Examples of handheld electronic devices are included in U.S. Patent Nos. 6,452,588 and 6,489,950. The handheld electronic device 4 is of a type that includes a cellular telephone capability which, as will be described in greater detail below, provides an improved call log in accordance with the invention. As used herein, the terms "phone" and "telephone" shall refer to any type of voice communication initiated and conducted over a wired and/or wireless network.

As can be understood from Fig. 1, the input apparatus 16 includes a keyboard 24 having a plurality of keys 26, and a rotatable thumbwheel 28. As used herein, the expression "key" and variations thereof shall refer broadly to any of a variety of input members such as buttons, switches, and the like without limitation. The keys 26 and the rotatable thumbwheel 28 are input members of the input apparatus 16, and each of the input members has a function assigned thereto. As used herein, the expression "function" and variations thereof can refer to any type of application program, process, task, procedure, routine, subroutine, function call, or other type of software or firmware operation that can be performed by the processor 20 of the handheld electronic device 4.

As is shown in Fig. 2, the processor 20 is in electronic communication with memory 44. Memory 44 can be any of a variety of types of internal and/or external storage media such as, without limitation, RAM, ROM, EPROM(s), EEPROM(s), and the like, that provide a storage register for data storage such as in the fashion of an internal storage area of a computer, and can be volatile memory or nonvolatile memory. The memory 44 further includes a number of applications executable by processor 20 for the processing of data. The applications can be in any of a variety of forms such as, without limitation, software, firmware, and the like, and the term "application" herein shall include one or more routines, subroutines, function calls or the like, alone or in combination.

As is also shown in Fig. 2, processor 20 is in electronic communication with communications subsystem 45. Communications functions for handheld electronic device 4, including data and voice communications, are performed through communications subsystem 45. Communications subsystem 45 includes a transmitter and a receiver (possibly combined in a single transceiver component) and one or more antennas. Other known components, such as a digital signal processor and a local oscillator, may also be part of communications subsystem 45. The specific design and implementation of communications subsystem 45 is dependent upon the communications network in which handheld electronic device 4 is intended to operate. For example, handheld electronic device 4 may include a communications subsystem 45 designed to operate with the Mobiltex^{™}, Dat TAC^{™} or General Packet Radio Service (GPRS) mobile data communication networks and also designed to operate with any of a variety of voice communications networks, such as AMPS, TDMA, CDMA, PCS, GSM, and other suitable networks. Other types of data and voice networks, both separate and integrated, may also be utilized with handheld electronic device 4. Together, processor 20, memory 44 and communications subsystem 45 may, along with other components (having various types of functionality), be referred to as a processing unit.

In Fig. 1, the display 12 is depicted as displaying a home screen 43 that includes a number of applications depicted as discrete icons 46, including an icon representing a phone application 48 and an address book application 50. As is known in the art, address book application 50 allows the user of handheld electronic device 4 to store information for a number of "contacts," including, among other things, the contact's name, phone number, home and office addresses, email address, and other information that may be used to contact the person. In Fig. 1, the home screen 43 is currently active and would constitute a portion of an application. In addition, display 12 shown in Fig. 1 shows a pop-up box 52 that indicates that there is currently a phone call coming into handheld electronic device 4. Pop-up box 52 provides certain information relating to the incoming call, including, for example, the caller's phone number and identifying information if the caller and phone number are stored as a contact by address book application 50 of handheld electronic device 4. Other applications, such as the phone application 48 or address book application 50, can be initiated from the home screen 43 by providing an input through the input apparatus 16, such as by rotating the thumbwheel 28 and providing a selection input by translating the thumbwheel 28 in the direction indicated by the arrow 54 in Fig. 1.

Phone application 48 stores in memory 44 certain information relating to all outgoing phone calls placed with and incoming phone calls received or missed by handheld electronic device 4. The stored information may include, without limitation, the date and time of the call, the phone number associated with the call, and the duration of the call. Phone application 48 of handheld electronic device 4 includes routines for providing an improved call log for providing information to the user of handheld electronic device 4 relating to outgoing phone calls placed using handheld electronic device 4 and incoming phone calls received and/or missed by handled electronic device 4.

Fig. 3 is an exemplary depiction of display 12 showing call log 56 including a plurality of calls 58 according to the invention. Call log 56 displays logged calls in a collapsed manner, meaning that for each phone number having information relating to a call or calls stored in memory 44 by phone application 48, only the most recent in time call 58 is listed on call log 56. Thus, each individual phone number having information relating to a call or calls stored in memory 44 will have a single entry in call log 56. Preferably, each of the call log calls 58 listed on call log 56 will include the date and time of the call, an icon indicating the nature of the call (i.e., placed, received or missed), and either the name of the caller or person called if that person and the phone number in question are stored as a contact by address book application 50, or the phone number associated with the call if the caller or called person is not stored as a contact. Also, call log 56 preferably lists the call log calls 58 in chronological order, beginning with the most recent call first. As will be described in greater detail below, a user of handheld electronic device 4 may select a particular call 58 from call log 56 and cause a call history associated with the selected call 58 to be displayed on display 12. In particular, the displayed call history will list all calls, incoming and outgoing, stored in memory 44 that are associated with the phone number associated with the selected call 58. The calls in the call history are preferably listed in chronological order beginning with the most recent call (which, as will be appreciated, will be the selected call 58 from call log 56).

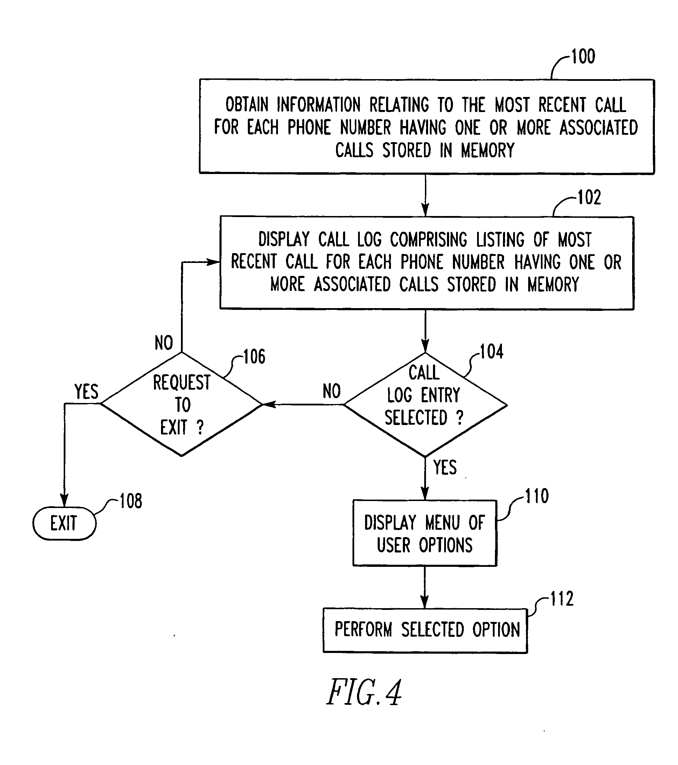

A flowchart depicting a routine performed by processor 20 for creating and implementing call log 56 of the invention is shown in Figure 4. In one embodiment, the routine of Figure 4 is initiated and call log 56 is created any time phone application 48 is activated by the user of handheld electronic device 4, such that call log 56 will be the default initial view provided on display 12 for phone application 48. Alternatively, the routine shown in Figure 4 may be initiated and call log 56 may be created and displayed upon request by the user from some other portion of phone application 48.

As shown in Fig. 4, the method begins at 100, where processor 20 obtains from memory 44 information relating to the most recent call, incoming or outgoing, for each phone number that has one or more associated calls stored in memory 44. Next, at 102, a list that includes the most recent in time call for each phone number having one or more associated calls stored in memory 44 is compiled and displayed on display 12 as call log 56. As described above, an example call log 56 is shown in Fig. 3. As used herein, the term "list" shall refer to a compilation of a series of items of information one after another that may or may not be in a predetermined order.

Next, at 104, a determination is made as to whether one of the calls 58 included as an entry on call log 56 is selected by the user, such as by highlighting the call 58 using input apparatus 16. If the answer at 104 is no, then at 106, a determination is made as to whether the user has provided a request using input apparatus 16, to exit either phone application 48 in the embodiment where call log 56 is displayed as the default view for phone application 48 or the call log view (and return to the default phone application view) in the embodiment where call log 56 is not displayed as the default view for phone application 48 but rather must be selected by user. If the answer at step 106 is yes, then the appropriate exit steps are taken at 108. If the answer is no, then the method returns to 102 to continue displaying call log 56.

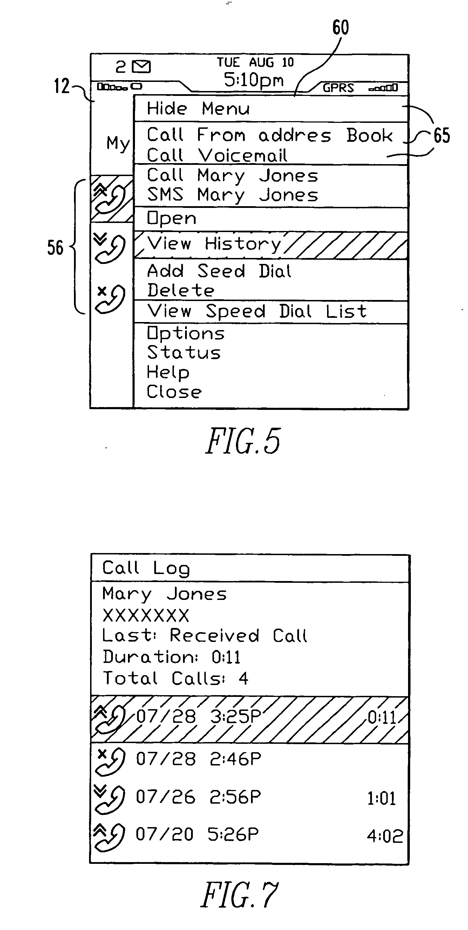

If, however, the answer at 104 is yes, meaning a call 58 has been chosen by the user, then at 110 a menu 60 of user options 65 is displayed on display 12 as shown in Fig. 5. User options 65 include a number of different functions of handheld electronic device 4 that may be implemented by selecting one of the user options 65. As shown in Fig. 5, such functions may include, without limitation, initiating an application for handheld electronic device 4 for closing menu 60, for calling a selected contact stored by address book application 50, for calling the user's voicemail, for calling the contact listed in call 58, for creating and sending a short message service (SMS) message to the contact listed in call 58, for opening the call 58 to display detailed call information relating to call 58 that is stored in memory 44, for creating and displaying on display 12 a call history for call 58 as described in more detail below, for adding the phone number associated with call 58 to the speed dial list maintained by phone application 48, for deleting call 58 from call log 56, for viewing the speed dial list maintained by phone application 48, for viewing and changing operating options for phone application 48, for viewing status information relating to, for example, the duration of the last call, the total number of minutes for all calls, and the phone number of handheld electronic device 4, for providing help to the user, and for closing phone application 48. Next, at 112 of Fig. 4, handheld electronic device 4 performs the function associated with the selected user option 65, whatever it may be.

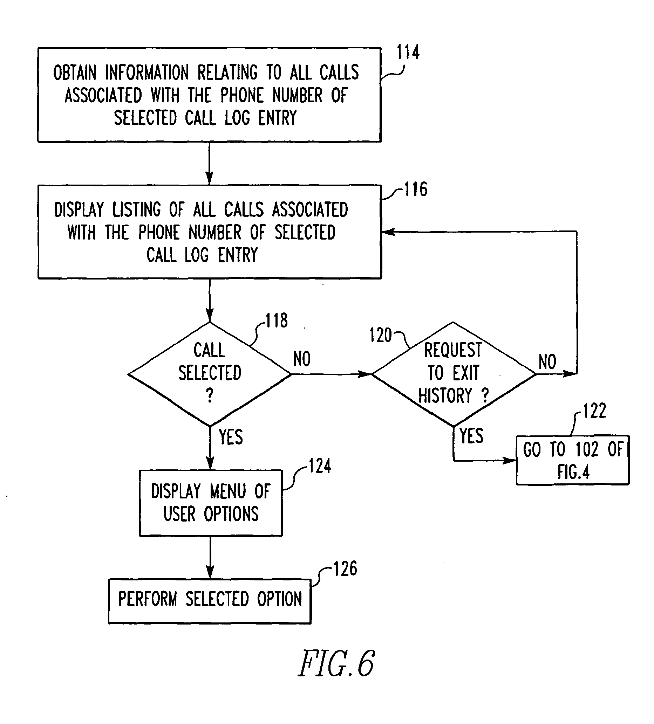

Referring to Fig. 6, a flowchart depicting a routine performed by processor 20 for displaying a call history according to the invention is shown. This routine will be initiated if the "view history" user option 65 of menu 60 (Fig. 5) is selected by the user after a particular call 58 has been selected. At 114, processor 20 obtains from memory 44 the call information for all calls associated with the phone number of selected call 58. As an alternative, if the phone number of chosen call 58 matches the phone number of a contact stored by address book application 50, call information for all calls associated with that contact may be obtained at step 114. At 116, a listing of the calls obtained at 114 is created and displayed, along with other information, on display 12 as shown in Fig. 7. As seen on Fig. 7, in addition to the listing of calls, the call history may include, without limitation, the name and phone number associated with the chosen call 58, the nature (i.e., place, received or missed) and duration of the last call, and the number of calls included in the history. Next, at 118 of Fig. 6, a determination is made as to whether a particular call from the displayed list is selected. If no call is selected, then at 120, it is determined whether the user has provided a request to exit the call history functionality. If the answer is yes, then at 122, the method returns to 102 of Fig. 4 wherein call log 56 is displayed. If, however, a call from the displayed list is selected as determined at 118, then, at 124, a menu of user options is displayed similar to menu 60 of user option 65 shown in Fig. 5. Next, at 126, handheld electronic device 4 performs the selected user option, whatever it may be.

Thus, the invention provides a handheld electronic device having functionality for providing a collapsed call log that gives a user a contact and/or phone number based view of the logged calls. In this manner, the user may readily access, view and request functions for all logged calls associated with a particular contact and/or originating or dialed phone number.

While specific embodiments of the invention have been described in detail, it will be appreciated by those skilled in the art that various modifications and alternatives to those details could be developed in light of the overall teachings of the disclosure. Accordingly, the particular arrangements disclosed are meant to be illustrative only and not limiting as to the scope of the invention which is to be given the full breadth of the claims appended and any and all equivalents thereof.

## Claims

1. A method of providing a call log (56) on a handheld electronic device (4), said method comprising:
storing call related information related to a plurality of calls from all outgoing and incoming phone calls, each of said phone calls being associated with one of a plurality of phone numbers;
compiling a list of call log phone calls (58), said call log phone calls (58) being a single one of said phone calls for each one of said phone numbers, said single one of said phone calls for said each one of said phone numbers being the most recent in time outgoing or incoming phone call associated with said one of said phone numbers;
displaying said list; and
displaying a call history for one of the call log phone calls (58) that is selected by a user, said call history including a listing of all of said phone calls associated with the phone number that is associated with the selected one of said call log phone calls (58).

2. The method according to claim 1, said list including call log information for each one of said call log phone calls (58), said call log information for said each one of said call log phone calls (58) including a date and time of said one of said call log phone calls (58).

3. The method according to claim 1, said list including call log information for each one of said call log phone calls (58), said call log information for said each one of said call log phone calls (58) including the phone number associated with said one of said call log phone calls (58).

4. The method according to claim 1, said handheld electronic device (4) having an address book application storing a plurality of contact names, said list including call log information for each one of said call log phone calls (58), said call log information for said each one of said call log phone calls (58) including at least one of the phone number associated with said one of said call log phone calls (58) and one of said contact names.

5. The method according to claim 1, said handheld electronic device (4) having an address book application (50) storing a plurality of contact names and associated contact phone numbers, said list including call log information for each one of said call log phone calls (58), said call log information said each one of said call log phone calls (58) including:
(i) the contact name associated with the phone number associated with said one of said call log phone calls (58) if the phone number associated with said one of said call log phone calls (58) matches one of said contact phone numbers, and
(ii) the phone number associated with said one of said call log phone calls (58) if the phone number associated with said one of said call log phone calls (58) does not match one of said contact phone numbers.

6. The method according to claim 1, said list listing said call log phone calls (58) in chronological order beginning with the most recent of said call log phone calls (58).

7. The method according to claim 1, further comprising displaying portions of the call related information for one of the call log phone calls (58) that is selected by a user.

8. The method according to claim 7, said portions of the call related information including the date, time and duration of and the phone number associated with the selected one of said call log phone calls (58).

9. The method according to claim 1, wherein the list of call log phone calls (58) includes a call log phone call of a caller or called person that is not stored as a contact by an address book (50) of the handheld electronic device (4).

10. The method according to claim 1, wherein the list of call log phone calls (58) includes a call log phone call of a caller or called person that is stored as a contact by an address book (50) of the handheld electronic device (4).

11. The method according to claim 1, said call history listing being in chronological order beginning with the most recent of said phone calls.

12. The method according to claim 1, further comprising providing a menu (60) of user options (65) for one of the phone calls on said call history listing that is selected by said user and performing a function associated with one of said user options selected by the user.

13. The method according to claim 1, further comprising providing a menu (60) of user options (65) for one of the call log phone calls (58) that is selected by a user and performing a function associated with one of said user options selected by the user.

14. A handheld electronic device (4), comprising:
an input apparatus (16);
a display (12);
a processor (20); and
a memory (44) storing one or more applications executable by said processor (20), said one or more applications being adapted to:
store call related information related to a plurality of calls from all outgoing and incoming phone calls in said memory (44), each of said phone calls being associated with a phone number;
compile a list of call log phone calls (58), said call log phone calls (58) being a single one of said phone calls for each one of said phone numbers, said single one of said phone calls for said each one of said phone numbers being the most recent in time outgoing or incoming phone call associated with said one of phone numbers;
display said list on said display (12); and
enable a user to select one of the call log phone calls (58) using said input apparatus and to display on said display (12) a call history of the selected one of the call log phone calls (58), said call history including a listing of all of said phone calls associated with the phone number that is associated with the selected one of the call log phone calls (58)..

15. The handheld electronic device (4) according to claim 14, said list including call log information for each one of said call log phone calls (58), said call log information for said each one of said call log phone calls (58) including a date and time of said one of said call log phone calls (58).

16. The handheld electronic device (4) according to claim 14, said list including call log information for each one of said call log phone calls (58), said call log information for said each one of said call log phone calls (58) including the phone number associated with said one of said call log phone calls (58).

17. The handheld electronic device (4) according to claim 14, said memory (44) storing an address book application (50) storing a plurality of contact names, said list including call log information for each one of said call log phone calls (58), said call log information for said each one of said call log phone calls (58) including at least one of the phone number associated with said one of said call log phone calls (58) and one of said contact names.

18. The handheld electronic device (4) according to claim 14, said memory (44) storing an address book application (50) storing a plurality of contact names and associated contact phone numbers, said list including call log information for each one of said call log phone calls (58), said call log information for said each one of said call log phone calls (58) including:
(i) the contact name associated with the phone number associated with said one of said call log phone calls (58) if the phone number associated with said one of said call log phone calls (58) matches one of said contact phone numbers, and
(ii) the phone number associated with said one of said call log phone calls (58) if the phone number associated with said one of said call log phone calls (58) does not match one of said contact phone numbers.

19. The handheld electronic device (4) according to claim 14, said list listing said call log phone calls (58) in chronological order beginning with the most recent of said call log phone calls (58).

20. The handheld electronic device (4) according to claim 14, said one or more applications being further adapted to enable a user to select one of the call log phone calls (58) using said input apparatus and to display on said display (12) portions of the call related information for the selected call log phone call (58).

21. The handheld electronic device (4) according to claim 20, said portions of the call related information including the date, time, and duration of and the phone number associated with the selected one of the call log phone calls (58).

22. The handheld electronic device (4) according to claim 14, wherein the list of call log phone calls (58) includes a call log phone call of a caller or called person that is not stored as a contact by an address book (50) of the handheld electronic device (4).

23. The handheld electronic device (4) according to claim 14, wherein the list of call log phone calls (58) includes a call log phone call of a caller or called person that is stored as a contact by an address book (50) of the handheld electronic device (4).

24. The handheld electronic device (4) according to claim 14, said call history listing being in chronological order beginning with the most recent of said phone calls.

25. The handheld electronic device (4) according to claim 14, said one or more applications being further adapted to enable the user to select one of the phone calls on said call history listing using said input apparatus (16), to display on said display (12) a menu (60) of user options (65) for said selected one of the phone calls, to enable the user to select one of the user options (65) using said input apparatus (16) and to perform a function associated with the selected one of the user options (65).

26. The handheld electronic device (4) according to claim 14, said one or more applications being further adapted to enable a user to select one of the call log phone calls (58) using said input apparatus (16), to display on said display (12) a menu (60) of user options (65) for the selected one of the call log phone calls (58), to enable the user to select one of the user options (65) and to perform a function associated with the selected one of the user options (65).

## Patentansprüche

1. Verfahren zum Vorsehen eines Anruf-Protokolls (56) auf einer tragbaren elektronischen Vorrichtung (4), wobei das Verfahren aufweist:
Speichern von Anruf-betreffender Information, die eine Vielzahl von Anrufen von allen abgehenden und ankommenden Telefonanrufen betrifft, wobei jeder der Telefonanrufe zu einer aus einer Vielzahl von Telefonnummern gehört;
Kompilieren einer Liste von Anruf-Protokoll-Telefonanrufen (58), wobei die Anruf-Protokoll-Telefonanrufe (58) ein einzelner der Telefonanrufe für jede der Telefonnummern sind, wobei der einzelne der Telefonanrufe für jede der Telefonnummern der zeitlich letzte abgehende oder ankommende Telefonanruf ist, der zu einer der Telefonnummern gehört;
Anzeigen der Liste; und
Anzeigen einer Anrufhistorie für einen der Anruf-Protokoll-Telefonanrufe (58), der von einem Benutzer ausgewählt wird, wobei die Anruf-Historie eine Auflistung aller Telefonanrufe umfasst, die zu der Telefonnummer gehören, die zu dem ausgewählten der Anruf-Protokoll-Telefonanrufe (58) gehört.

2. Verfahren gemäß Anspruch 1, wobei die Liste eine Anruf-Protokoll-Information für jeden der Anruf-Protokoll-Telefonanrufe (58) umfasst, wobei die Anruf-Protokoll-Information für jeden der Anruf-Protokoll-Telefonanrufe (58) ein Datum und eine Zeit des einen Anruf-Protokoll-Telefonanrufes (58) umfasst.

3. Verfahren gemäß Anspruch 1, wobei die Liste eine Anruf-Protokoll-Information für jeden der Anruf-Protokoll-Telefonanrufe (58) umfasst, wobei die Anruf-Protokoll-Information für jeden der Anruf-Protokoll-Telefonanrufe (58) die Telefonnummer umfasst, die zu dem einen der Anruf-Protokoll-Telefonanrufe (58) gehört.

4. Verfahren gemäß Anspruch 1, wobei die tragbare elektronische Vorrichtung (4) eine Adressbuch-Anwendung hat, die eine Vielzahl von Kontaktnamen speichert, wobei die Liste eine Anruf-Protokoll-Information für jeden der Anruf-Protokoll-Telefonanrufe (58) umfasst, wobei die Anruf-Protokoll-Information für jeden der Anruf-Protokoll-Telefonanrufe (58) zumindest eine der Telefonnummern umfasst, die zu dem einen der Anruf-Protokoll-Telefonanrufe (58) gehört, und einen der Kontaktnamen.

5. Verfahren gemäß Anspruch 1, wobei die tragbare elektronische Vorrichtung (4) eine Adressbuch-Anwendung (50) hat, die eine Vielzahl von Kontaktnamen und zugehörige Kontakttelefonnummern speichert, wobei die Liste eine Anruf-Protokoll-Information für jeden der Anruf-Protokoll-Telefonanrufe (58) umfasst, wobei die Anruf-Protokoll-Information für jeden der Anruf-Protokoll-Telefonanrufe (58) umfasst:
(i) den Kontaktnamen, der zu der Telefonnummer gehört, die zu dem einen der Anruf-Protokoll-Telefonanrufe (58) gehört, wenn die Telefonnummer, die zu dem einen der Anruf-Protokoll-Telefonanrufe (58) gehört, mit einer der Kontakttelefonnummern übereinstimmt, und
(ii) die Telefonnummer, die zu dem einen der Anruf-Protokoll-Telefonanrufe (58) gehört, wenn die Telefonnummer, die zu dem einen der Anruf-Protokoll-Telefonanrufe (58) gehört, nicht mit einer der Kontakttelefonnummern übereinstimmt.

6. Verfahren gemäß Anspruch 1, wobei die Liste die Anruf-Protokoll-Telefonanrufe (58) in chronologischer Reihenfolge auflistet, beginnend mit dem letzten der Anruf-Protokoll-Telefonanrufe (58).

7. Verfahren gemäß Anspruch 1, das weiter aufweist ein Anzeigen von Teilen der Anruf-betreffenden Information für einen der Anruf-Protokoll-Telefonanrufe (58), der von einem Benutzer ausgewählt wird.

8. Verfahren gemäß Anspruch 7, wobei die Teile der Anruf-betreffenden Information das Datum, die Zeit und die Dauer und die Telefonnummer umfassen, die zu dem ausgewählten der Anruf-Protokoll-Telefonanrufe (58) gehört.

9. Verfahren gemäß Anspruch 1, wobei die Liste von Anruf-Protokoll-Telefonanrufen (58) einen Anruf-Protokoll-Telefonanruf eines Anrufers oder einer angerufenen Person umfasst, der/die nicht als ein Kontakt durch das Adressbuch (50) der tragbaren elektronischen Vorrichtung (4) gespeichert ist.

10. Verfahren gemäß Anspruch 1, wobei die Liste von Anruf-Protokoll-Telefonanrufen (58) einen Anruf-Protokoll-Telefonanruf eines Anrufers oder einer angerufenen Person umfasst, der/die als ein Kontakt durch das Adressbuch (50) der tragbaren elektronischen Vorrichtung (4) gespeichert ist.

11. Verfahren gemäß Anspruch 1, wobei die Anruf-Historie-Auflistung in einer chronologischen Reihenfolge ist, beginnend mit dem letzten der Telefonanrufe.

12. Verfahren gemäß Anspruch 1, das weiter aufweist ein Vorsehen eines Menüs (60) aus Benutzeroptionen (65) für einen der Telefonanrufe auf der Anruf-Historie-Auflistung, der von dem Benutzer ausgewählt wird, und Durchführen einer Funktion, die zu einer der Benutzeroptionen gehört, die durch den Benutzer ausgewählt wird.

13. Verfahren gemäß Anspruch 1, das weiter aufweist ein Vorsehen eines Menüs (60) aus Benutzeroptionen (65) für einen der Anruf-Protokoll-Telefonanrufe (58), der von einem Benutzer ausgewählt wird, und Durchführen einer Funktion, die zu einer der Benutzeroptionen gehört, die durch den Benutzer ausgewählt wird.

14. Tragbare elektronische Vorrichtung (4), die aufweist:
eine Eingabevorrichtung (16);
eine Anzeige (12);
einen Prozessor (20); und
einen Speicher (44), der eine oder mehrere Anwendungen speichert, die ausführbar sind durch den Prozessor (20), wobei die eine oder mehrere Anwendungen ausgebildet ist/sind:
Anruf-betreffende Information, die eine Vielzahl von Anrufen von allen abgehenden und ankommenden Telefonanrufen betrifft, in dem Speicher (44) zu speichern, wobei jeder der Telefonanrufe zu einer Telefonnummer gehört;
eine Liste von Anruf-Protokoll-Telefonanrufen (58) zu kompilieren, wobei die Anruf-Protokoll-Telefonanrufe (58) ein einzelner der Telefonanrufe für jede der Telefonnummern sind, wobei der einzelne der Telefonanrufe für jede der Telefonnummern der zeitlich letzte abgehende oder ankommende Telefonanruf ist, der zu der einen der Telefonnummern gehört;
die Liste auf der Anzeige (12) anzuzeigen; und
einem Benutzer zu ermöglichen, einen der Anruf-Protokoll-Telefonanrufe (58) unter Verwendung der Eingabevorrichtung auszuwählen und auf der Anzeige (12) eine Anruf-Historie des ausgewählten der Anruf-Protokoll-Telefonanrufe (58) anzuzeigen, wobei die Anruf-Historie eine Auflistung aller Telefonanrufe umfasst, die zu der Telefonnummer gehören, die zu dem ausgewählten der Anruf-Protokoll-Telefonanrufe (58) gehört.

15. Tragbare elektronische Vorrichtung (4) gemäß Anspruch 14, wobei die Liste eine Anruf-Protokoll-Information für jeden der Anruf-Protokoll-Telefonanrufe (58) umfasst, wobei die Anruf Protokoll-Information für jeden der Anruf-Protokoll-Telefonanrufe (58) ein Datum und eine Zeit des einen Anruf-Protokoll-Telefonanrufs (58) umfasst.

16. Tragbare elektronische Vorrichtung (4) gemäß Anspruch 14, wobei die Liste eine Anruf-Protokoll-Information für jeden der Anruf-Protokoll-Telefonanrufe (58) umfasst, wobei die Anruf-Protokoll-Information für jeden der Anruf-Protokoll-Telefonanrufe (58) die Telefonnummer umfasst, die zu dem einen der Anruf-Protokoll-Telefonanrufe (58) gehört.

17. Tragbare elektronische Vorrichtung (4) gemäß Anspruch 14, wobei der Speicher (44) eine Adressbuch-Anwendung (50) speichert, die eine Vielzahl von Kontaktnamen speichert, wobei die Liste eine Anruf-Protokoll-Information für jeden der Anruf-Protokoll-Telefonanrufe (58) umfasst, wobei die Anruf-Protokoll-Information für jeden der Anruf-Protokoll-Telefonanrufe (58) zumindest eine der Telefonnummern umfasst, die zu dem einen der Anruf-Protokoll-Telefonanrufe (58) gehört, und einen der Kontaktnamen.

18. Tragbare elektronische Vorrichtung (4) gemäß Anspruch 14, wobei der Speicher (44) eine Adressbuch-Anwendung (50) speichert, die eine Vielzahl von Kontaktnamen und zugehörige Kontakttelefonnummern speichert, wobei die Liste eine Anruf-Protokoll-Information für jeden der Anruf-Protokoll-Telefonanrufe (58) umfasst, wobei die Anruf-Protokoll-Information für jeden der Anruf-Protokoll-Telefonanrufe (58) umfasst:
(i) den Kontaktnamen, der zu der Telefonnummer gehört, die zu dem einen der Anruf-Protokoll-Telefonanrufe (58) gehört, wenn die Telefonnummer, die zu dem einen der Anruf-Protokoll-Telefonanrufe (58) gehört, mit einer der Kontakttelefonnummern übereinstimmt, und
(ii) die Telefonnummer, die zu dem einen der Anruf-Protokoll-Telefonanrufe (58) gehört, wenn die Telefonnummer, die zu dem einen der Anruf-Protokoll-Telefonanrufe (58) gehört, nicht mit einer der Kontakttelefonnummern übereinstimmt.

19. Tragbare elektronische Vorrichtung (4) gemäß Anspruch 14, wobei die Liste die Anruf-Protokoll-Telefonanrufe (58) in chronologischer Reihenfolge auflistet, beginnend mit dem letzten der Anruf-Protokoll-Telefonanrufe (58).

20. Tragbare elektronische Vorrichtung (4) gemäß Anspruch 14, wobei die eine oder mehrere Anwendungen weiter ausgebildet ist/sind, einem Benutzer zu ermöglichen, einen der Anruf-Protokoll-Telefonanrufe (58) unter Verwendung der Eingabevorrichtung auszuwählen und auf der Anzeige (12) Teile der Anruf-betreffenden Information für den ausgewählten Anruf-Protokoll-Telefonanruf anzuzeigen.

21. Tragbare elektronische Vorrichtung (4) gemäß Anspruch 20, wobei die Teile der Anruf betreffenden Information das Datum, die Zeit und die Dauer und die Telefonnummer umfassen, die zu dem ausgewählten der Anruf-Protokoll-Telefonanrufe (58) gehört.

22. Tragbare elektronische Vorrichtung (4) gemäß Anspruch 14, wobei die Liste von Anruf-Protokoll-Telefonanrufen (58) einen Anruf-Protokoll-Telefonanruf eines Anrufers oder einer angerufenen Person umfasst, der/die nicht als ein Kontakt durch ein Adressbuch (50) der tragbaren elektronischen Vorrichtung (4) gespeichert ist.

23. Tragbare elektronische Vorrichtung (4) gemäß Anspruch 14, wobei die Liste von Anruf-Protokoll-Telefonanrufen (58) einen Anruf-Protokoll-Telefonanruf eines Anrufers oder einer angerufenen Person umfasst, der/die als ein Kontakt durch ein Adressbuch (50) der tragbaren elektronischen Vorrichtung (4) gespeichert ist.

24. Tragbare elektronische Vorrichtung (4) gemäß Anspruch 14, wobei die Anruf-Historie-Auflistung in einer chronologischen Reihenfolge ist, beginnend mit dem letzten der Telefonanrufe.

25. Tragbare elektronische Vorrichtung (4) gemäß Anspruch 14, wobei die eine oder mehrere Anwendungen weiter ausgebildet sind, dem Benutzer zu ermöglichen, einen der Telefonanrufe auf der Anruf-Historie-Auflistung unter Verwendung der Eingabevorrichtung (16) auszuwählen, auf der Anzeige (12) ein Menü (60) von Benutzeroptionen (65) für den ausgewählten der Telefonanrufe anzuzeigen, um dem Benutzer zu ermöglichen, eine der Benutzeroptionen (65) unter Verwendung der Eingabevorrichtung (16) auszuwählen und eine Funktion durchzuführen, die zu der gewählten der Benutzeroptionen (65) gehört.

26. Tragbare elektronische Vorrichtung (4) gemäß Anspruch 14, wobei die eine oder mehrere Anwendungen weiter ausgebildet ist/sind, einem Benutzer zu ermöglichen, einen der Anruf-Protokoll-Telefonanrufe (58) unter Verwendung der Eingabevorrichtung (16) auszuwählen, auf der Anzeige (12) ein Menü (60) von Benutzeroptionen (65) für den ausgewählten der Anruf-Protokoll-Telefonanrufe (58) anzuzeigen, um dem Benutzer zu ermöglichen, eine der Benutzeroptionen (65) auszuwählen und eine Funktion durchzuführen, die zu der gewählten der Benutzeroptionen (65) gehört.

## Revendications

1. Procédé de fourniture d'un journal (56) des appels sur un dispositif (4) électronique portable, ledit procédé étant constitué :
d'un stockage d'informations ayant trait à un appel liées à une pluralité d'appels au sujet de tous les appels téléphoniques sortants et entrants, chacun desdits appels téléphoniques étant associé à l'un parmi une pluralité de numéros de téléphone ;
d'une compilation d'une liste d'appels (58) téléphoniques de journal d'appel, lesdits appels (58) téléphoniques de journal d'appel étant un appel téléphonique unique parmi lesdits appels téléphoniques pour chacun desdits numéros de téléphone, ledit appel téléphonique unique parmi lesdits appels téléphoniques pour ledit chacun desdits numéros de téléphone étant l'appel téléphonique sortant ou entrant le plus récent dans le temps associé audit un desdits numéros de téléphone ;
d'un affichage de ladite liste ; et
d'un affichage d'un historique d'appels pour l'un des appels (58) téléphoniques de journal d'appel qui est sélectionné par un utilisateur, ledit historique d'appels incluant un listage de tous lesdits appels téléphoniques associés au numéro de téléphone qui est associé à celui qui a été sélectionné desdits appels (58) téléphoniques de journal d'appel.

2. Procédé selon la revendication 1, ladite liste incluant des informations de journal d'appel pour chacun desdits appels (58) téléphoniques de journal d'appel, lesdites informations de journal d'appel pour ledit chacun desdits appels (58) téléphoniques de journal d'appel incluant une date ainsi qu'une heure dudit un desdits appels (58) téléphoniques de journal d'appel.

3. Procédé selon la revendication 1, ladite liste incluant des informations de journal d'appel pour chacun desdits appels (58) téléphoniques de journal d'appel, lesdites informations de journal d'appel pour ledit chacun desdits appels (58) téléphoniques de journal d'appel incluant un numéro de téléphone associé audit un desdits appels (58) téléphoniques de journal d'appel.

4. Procédé selon la revendication 1, ledit dispositif (4) électronique portable ayant une application de carnet d'adresses stockant une pluralité de noms de contacts, ladite liste incluant des informations de journal d'appel pour chacun desdits appels (58) téléphoniques de journal d'appel, lesdites informations de journal d'appel pour lesdits chacun desdits appels (58) téléphoniques de journal d'appel incluant au moins l'un parmi le numéro de téléphone associé audit un desdits appels (58) téléphoniques de journal d'appel et l'un desdits noms de contact.

5. Procédé selon la revendication 1, ledit dispositif (4) électronique portable ayant une application (50) de carnet d'adresses stockant une pluralité de noms de contacts ainsi que des numéros de téléphone de contact associés, ladite liste incluant des informations de journal d'appel pour chacun desdits appels (58) téléphoniques de journal d'appel, lesdites informations de journal d'appel pour lesdits chacun desdits appels (58) téléphoniques de journal d'appel incluant :
(i) le nom de contact ayant trait au numéro de téléphone associé audit un desdits appels (58) téléphoniques de journal d'appel si le numéro de téléphone associé audit un desdits appels (58) téléphoniques de journal d'appel correspond à l'un desdits numéros de téléphone de contact, et
(ii) le numéro de téléphone associé audit un desdits appels (58) téléphonique de journal d'appel si le numéro de téléphone associé audit un desdits appels (58) téléphoniques de journal d'appel ne correspond pas à l'un desdits numéros de téléphone de contact.

6. Procédé selon la revendication 1, ladite liste listant lesdits appels (58) téléphoniques de journal d'appel dans un ordre chronologique commençant avec le plus récent desdits appels (58) téléphoniques de journal d'appel.

7. Procédé selon la revendication 1, comportant de plus un affichage de parties des informations liées à l'appel pour l'un des appels (58) téléphoniques de journal d'appel qui est sélectionné par un utilisateur.

8. Procédé selon la revendication 7, lesdites parties des informations liées à l'appel incluant la date, l'heure ainsi que la durée de l'appel sélectionné desdits appels (58) téléphoniques de journal d'appel ainsi que le numéro de téléphone associé à celui-ci.

9. Procédé selon la revendication 1, dans lequel la liste des appels (58) téléphoniques de journal d'appel inclut un appel téléphonique de journal d'appel d'une personne appelant ou appelée qui n'est pas stockée comme un contact par un carnet (50) d'adresses du dispositif (4) électronique portable.

10. Procédé selon la revendication 1, dans lequel la liste des appels (58) téléphoniques de journal d'appel inclut un appel téléphonique de journal d'appel d'une personne appelant ou appelée qui est stockée comme un contact par un carnet (50) d'adresses du dispositif (4) électronique portable.

11. Procédé selon la revendication 1, ladite liste d'historique d'appels étant un ordre chronologique commençant avec le plus récent desdits appels téléphoniques.

12. Procédé selon la revendication 1, comportant de plus une fourniture d'un menu (60) d'options (65) d'utilisateur pour l'un des appels téléphoniques sur ladite liste d'historique d'appels qui est sélectionné par ledit utilisateur ainsi qu'une exécution d'une fonction associée à l'une desdites options d'utilisateur sélectionnée par l'utilisateur.

13. Procédé selon la revendication 1, comportant de plus une fourniture d'un menu (60) d'options (65) d'utilisateur pour l'un des appels (58) téléphoniques de journal d'appel qui est sélectionné par un utilisateur ainsi qu'une exécution d'une fonction associée à l'une desdites options d'utilisateur sélectionnée par l'utilisateur.

14. Dispositif (4) électronique portable constitué :
d'un dispositif (16) de saisie ;
d'un affichage (12) ;
d'un processeur (20) ; et
d'une mémoire (44) stockant une ou plus d'une application pouvant être exécutée par ledit processeur (20), ladite une ou plus d'une application étant conçue pour :
stocker dans ladite mémoire (44) des informations ayant trait à l'appel liées à une pluralité d'appels au sujet de tous les appels téléphoniques sortants et entrants, chacun desdits appels téléphoniques étant associé à un numéro de téléphone ;
compiler une liste d'appels (58) téléphoniques de journal d'appel, lesdits appels (58) téléphoniques de journal d'appel étant un appel téléphonique unique parmi lesdits appels téléphoniques pour chacun desdits numéros de téléphone, ledit appel téléphonique unique parmi lesdits appels téléphoniques pour lesdits chacun desdits numéros de téléphone étant l'appel téléphonique sortant ou entrant le plus récent dans le temps associé audit un desdits numéros de téléphone ;
afficher ladite liste sur ledit affichage (12) ; et
permettre à un utilisateur de sélectionner l'un des appels (58) téléphoniques de journal d'appel en utilisant ledit dispositif de saisie et d'afficher sur ledit affichage (12) un historique d'appels de celui qui est sélectionné parmi les appels (58) téléphoniques de journal d'appel, ledit historique d'appels incluant un listage de tous lesdits appels téléphoniques associés au numéro de téléphone qui est associé à celui qui est sélectionné desdits appels (58) téléphoniques de journal d'appel.

15. Dispositif (4) électronique portable selon la revendication 14, ladite liste incluant des informations de journal d'appel pour chacun desdits appels (58) téléphoniques de journal d'appel, lesdites informations de journal d'appel pour ledit chacun desdits appels (58) téléphoniques de journal d'appel incluant une date ainsi qu'une heure dudit un desdits appels (58) téléphoniques de journal d'appel.

16. Dispositif (4) électronique portable selon la revendication 14, ladite liste incluant des informations de journal d'appel pour chacun desdits appels (58) téléphoniques de journal d'appel, lesdites informations de journal d'appel pour ledit chacun desdits appels (58) téléphoniques de journal d'appel incluant un numéro de téléphone associé audit un desdits appels (58) téléphoniques de journal d'appel.

17. Dispositif (4) électronique portable selon la revendication 14, ladite mémoire (44) stockant une application (50) de carnet d'adresses stockant une pluralité de noms de contacts, ladite liste incluant des informations de journal d'appel pour chacun desdits appels (58) téléphoniques de journal d'appel, lesdites informations de journal d'appel pour lesdits chacun desdits appels (58) téléphoniques de journal d'appel incluant au moins l'un parmi le numéro de téléphone associé audit un desdits appels (58) téléphoniques de journal d'appel et l'un desdits noms de contact.

18. Dispositif (4) électronique portable selon la revendication 14, ladite mémoire (44) stockant une application (50) de carnet d'adresses stockant une pluralité de noms de contacts ainsi que des numéros de téléphone de contact associés, ladite liste incluant des informations de journal d'appel pour chacun desdits appels (58) téléphoniques de journal d'appel, lesdites informations de journal d'appel pour ledit chacun desdits appels (58) téléphoniques de journal d'appel incluant :
(i) le nom de contact ayant trait au numéro de téléphone associé audit un desdits appels (58) téléphoniques de journal d'appel si le numéro de téléphone associé audit un desdits appels (58) téléphoniques de journal d'appel correspond à l'un desdits numéros de téléphone de contact, et
(ii) le numéro de téléphone associé audit un desdits appels (58) téléphoniques de journal d'appel si le numéro de téléphone associé audit un desdits appels (58) téléphoniques de journal d'appel ne correspond pas à l'un desdits numéros de téléphone de contact.

19. Dispositif (4) électronique portable selon la revendication 14, ladite liste listant lesdits appels (58) téléphoniques de journal d'appel dans un ordre chronologique commençant avec le plus récent desdits appels (58) téléphoniques de journal d'appel.

20. Dispositif (4) électronique portable selon la revendication 14, ladite une ou plus d'une application étant de plus conçue pour permettre à un utilisateur de sélectionner l'un des appels (58) téléphoniques de journal d'appel en utilisant ledit dispositif de saisie et d'afficher sur ledit affichage (12) des parties des informations liées à l'appel pour l'appel (58) téléphonique de journal d'appel sélectionné.

21. Dispositif (4) électronique portable selon la revendication 20, lesdites parties des informations liées à l'appel incluant la date, l'heure ainsi que la durée de l'appel sélectionné parmi les appels (58) téléphoniques de journal d'appel ainsi que le numéro de téléphone associé à celui-ci.

22. Dispositif (4) électronique portable selon la revendication 14, dans lequel la liste des appels (58) téléphoniques de journal d'appel inclut un appel téléphonique de journal d'appel d'une personne appelant ou appelée qui n'est pas stockée comme un contact par un carnet (50) d'adresses du dispositif (4) électronique portable.

23. Dispositif (4) électronique portable selon la revendication 14, dans lequel la liste des appels (58) téléphoniques de journal d'appel inclut un appel téléphonique de journal d'appel d'une personne appelant ou appelée qui est stockée comme un contact par un carnet (50) d'adresses du dispositif (4) électronique portable.

24. Dispositif (4) électronique portable selon la revendication 14, ladite liste d'historique d'appels étant un ordre chronologique commençant avec le plus récent desdits appels téléphoniques.

25. Dispositif (4) électronique portable selon la revendication 14, ladite une ou plus d'une application étant de plus conçue pour permettre à l'utilisateur de sélectionner l'un des appels téléphoniques sur ladite liste d'historique d'appels en utilisant ledit dispositif (16) de saisie, d'afficher sur ledit affichage (12) un menu (60) d'options (65) d'utilisateur pour ledit appel sélectionné parmi les appels téléphoniques, pour permettre à l'utilisateur de sélectionner l'une des options (65) d'utilisateur en utilisant ledit dispositif (16) de saisie et d'exécuter une fonction associée à celle qui a été sélectionnée parmi les options (65) d'utilisateur.

26. Dispositif (4) électronique portable selon la revendication 14, ladite une ou plus d'une application étant de plus conçue pour permettre à un utilisateur de sélectionner l'un des appels (58) téléphoniques de journal d'appel en utilisant ledit dispositif (16) de saisie, d'afficher sur ledit affichage (12) un menu (60) d'options (65) d'utilisateur pour l'appel sélectionné parmi les appels (58) téléphoniques de journal d'appel, pour permettre à l'utilisateur de sélectionner l'une des options (65) d'utilisateur et d'exécuter une fonction associée à l'option sélectionnée parmi les options (65) d'utilisateur.
